# EUROPEAN PATENT APPLICATION

(11) **EP 4 412 379 A1**
(43) Date of publication of application: **07.08.2024**
(21) Application number: 21958951.2
(22) Date of filing: 30.09.2021
(51) Int. Cl.: H04W 74/08

(54) **METHOD AND APPARATUS FOR ACCESSING UNLICENSED CHANNEL, AND DEVICE AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Gunzelmann, Rainer
(86) International application number: PCT/CN2021/122365
(87) International publication number: WO 2023/050380

(57) **Abstract**

Provided in the present disclosure are a method and apparatus for accessing an unlicensed channel, and a device and a storage medium, which are applied to the technical field of wireless communications. The method comprises: receiving access mode indication information and downlink control information (DCI) from a network device, wherein the access mode indication information indicates a first access mode, and the first access mode corresponds to the fact that listen before talk (LBT) does not need to be executed before a channel is occupied; on the basis of the access mode indication information and/or the DCI, determining a mode for accessing an unlicensed channel, wherein the mode for accessing the unlicensed channel is the first access mode or a second access mode, and the second access mode corresponds to the fact that LBT is executed before a channel is occupied; and accessing the unlicensed channel by using the determined mode for accessing the unlicensed channel. In the method, a user equipment receives access mode indication information and DCI; and when access modes indicated by the two are the same or different, an appropriate determination policy is used to accurately determine an access mode truly indicated by a network device, such that an unlicensed channel is correctly accessed.

## Description

### TECHNICAL FIELD

The disclosure relates to the field of wireless communication technologies, in particular to a method and an apparatus for accessing an unlicensed channel, a communication device, and a storage medium.

### BACKGROUND

In a scenario where an unlicensed spectrum is used, it is generally necessary to use a Listen Before Talk (LBT) channel access mechanism on an unlicensed frequency band. With the LBT mechanism, a transmitter needs to listen to the channel or perform Clear Channel Assessment (CCA) on the channel before occupying the channel to send data. After performing the CCA, the transmitter may determine that the channel is in an idle state and occupies the channel to send data, otherwise the transmitter cannot occupy the channel. When the transmitter occupies the channel, a corresponding Maximum Channel Occupy Time (MCOT) is agreed upon by a protocol or configured by a base station.

A new channel access type is introduced in New Radio (NR) 52.6-71GHz. This new channel access type does not require the LBT access mechanism, which may also be referred to as a No-LBT access type. That is, the transmitter does not need to listen to the channel before occupying the unlicensed channel to send data. Rather, the transmitter may directly occupy the channel to send data.

Downlink Control Information (DCI) has a channel access and cyclic prefix extension (ChannelAccess-CPext) information field for indicating a corresponding channel access type of the channel, which is an indication of performing the LBT.

How a User Equipment (UE) determines which of access types to use is a technical problem to be solved.

### SUMMARY

In view of this, the disclosure provides a method and an apparatus for accessing an unlicensed channel, a communication device, and a storage medium.

According to a first aspect of embodiments of the disclosure, a method for accessing an unlicensed channel is provided. The method includes:
receiving access type indication information and downlink control information (DCI) from a network device, in which the access type indication information indicates a first access type, and the first access type does not require to perform a listen before tall (LBT) before occupying a channel;
determining an access type of accessing the unlicensed channel based on the access type indication information and/or the DCI, in which the access type of accessing the unlicensed channel is the first access type or a second access type, and the second access type requires to perform the LBT before the occupying the channel; and
accessing the unlicensed channel using the determined access type of accessing the unlicensed channel.
In this method, the UE receives the access type indication information and the DCI, and determines an access type actually indicated by the network device through a proper determination strategy based on the access types indicated by the access type indication information and the DCI, to access the unlicensed channel correctly.

In a possible implementation, receiving the access type indication information from the network device includes:
receiving broadcast information from the network device, in which the broadcast information includes the access type indication information; or
receiving user equipment (UE)-specific Radio Resource Control (RRC) information from the network device, in which the UE-specific RRC information includes the access type indication information.

In a possible implementation, the DCI is fallback DCI and the fallback DCI at least includes DCI 0-0 and DCI 1-0; or the DCI is non-fallback DCI and the non-fallback DCI at least includes DCI 0-1 and DCI 1-1.

In a possible implementation, the DCI include or does not include a channel access and cyclic prefix extension (ChannelAccess-CPext) information field, in which the information field includes information related to the access type.

In a possible implementation, determining the access type of accessing the unlicensed channel based on the access type indication information and the DCI includes: in response to the DCI being the non-fallback DCI and the DCI not containing the ChannelAccess-CPext information field, determining that the access type of accessing the unlicensed channel is the first access type, in which the ChannelAccess-CPext information field is configured to indicate information related to the access type of accessing the unlicensed channel.

In a possible implementation, determining the access type of accessing the unlicensed channel based on the access type indication information and the DCI includes: in response to the DCI containing the ChannelAccess-CPext information field and the information field indicating the second access type, determining that the access type of accessing the unlicensed channel is the first access type.

In a possible implementation, determining the access type of accessing the unlicensed channel based on the access type indication information and the DCI includes: in response to the DCI being non-fallback DCI, the DCI containing the ChannelAccess-CPext information field, and the information field indicating the first access type, determining that the access type of accessing the unlicensed channel is the first access type.

In a possible implementation, determining the access type of accessing the unlicensed channel based on the access type indication information and the DCI includes: in response to the DCI being non-fallback DCI, the DCI containing the ChannelAccess-CPext information field, and the information field indicating the first access type or the second access type, determining that the access type of accessing the unlicensed channel is an access type corresponding to information indicated by the information field.

In a possible implementation, the method further includes: receiving a RRC signaling from the network device, in which the RRC signaling includes an uplink access configuration list parameter contained in the non-fallback DCI, the uplink access configuration list parameter includes at least one entry contained in a ChannelAccess-CPext Table, the at least one entry includes an entry corresponding to the first access type, and the ChannelAccess-CPext information field indicates an entry corresponding to the first access type.

In a possible implementation, the ChannelAccess-CPext table includes at least one entry corresponding to the first access type.

In a possible implementation, the uplink access configuration list parameter contained in the DCI 0-1 is ul-AccessConfigListDCI-0-1; or the uplink access configuration list parameter contained in the DCI 1-1 is ul-AccessConfigListDCI-1-1.

According to a second aspect of embodiments of the disclosure, a method for accessing an unlicensed channel, performed by a network device, is provided. The method includes:
sending access type indication information and downlink control information (DCI) to a user equipment (UE), to enable the UE to determine an access type of accessing the unlicensed channel based on the access type indication information and/or the DCI, and access the unlicensed channel using a determined access type of accessing the unlicensed channel;
in which the access type indication information indicates a first access type, the access type of accessing the unlicensed channel is the first access type or a second access type, the first access type does not require to perform a listen before talk (LBT) before occupying a channel, and the second access type requires to perform the LBT before occupying the channel.

In a possible implementation, sending the access type indication information to the UE includes:
sending broadcast information to the UE, in which the broadcast information includes the access type indication information; or
sending UE-specific Radio Resource Control (RRC) information to the UE, in which the UE-specific RRC information includes the access type indication information.

In a possible implementation, the DCI is fallback DCI and the fallback DCI at least includes DCI 0-0 and DCI 1-0; or, the DCI is non-fallback DCI and the non-fallback DCI at least include DCI 0-1 and DCI 1-1.

In a possible implementation, the DCI includes or does not include a channel access and cyclic prefix extension (ChannelAccess-CPext) information field, and the information field includes information related to an access type.

In a possible implementation, a RRC signaling is sent to the UE, in which the RRC signaling includes an uplink access configuration list parameter contained in the non-fallback DCI, the uplink access configuration list parameter includes at least one entry contained in a ChannelAccess-CPext table, the ChannelAccess-CPext table includes at least one entry corresponding to the first access type, and the ChannelAccess-CPext information field indicates an entry corresponding to the first access type.

In a possible implementation, the uplink access configuration list parameter contained in the DCI 0-1 is ui-AccessConfigListDCi-0-1; or the uplink access configuration list parameter contained in the DCI 1-1 is ul-AccessConfigListDCI-1-1.

According to a third aspect of embodiments of the disclosure, a communication device is provided. The communication device is configured to perform steps performed by the network device in the first aspect described above or in any of the possible designs of the first aspect. The network device may implement each of the functions in the methods described above by means of a hardware structure, a software module, or a combination of the hardware structure and the software module.

When the communication device in the third aspect is implemented through a software module, the communication device may include a transceiver module and a processing module coupled to each other. The transceiver module is configured to support the communication device in communicating. The processing module is used by the communication device to perform processing operations, e.g., generating information/messages to be sent, or processing a received signal to obtain information/messages.

When performing the steps described in the first aspect, the transceiver module is configured to receive access type indication information and downlink control information (DCI) from a network device, in which the access type indication information indicates a first access type, and the first access type does not require to perform a listen before talk (LBT) before occupying a channel.

The processing module is configured to determine an access type of accessing the unlicensed channel based on the access type indication information and/or the DCI, in which the access type of accessing the unlicensed channel is the first access type or a second access type, and the second access type requires to perform the LBT before occupying the channel.

The transceiver module is configured to access the unlicensed channel using a determined access type of accessing the unlicensed channel.

According to a fourth aspect of embodiments of the disclosure, a communication device is provided. The communication device is configured to perform steps performed by the UE in the second aspect described above or in any of the possible designs of the second aspect. The UE may implement each of the functions in the methods described above by means of a hardware structure, a software module, or a combination of the hardware structure and the software module.

When the communication device shown in the fourth aspect is implemented through a software module, the communication device may include a transceiver module and a processing module coupled to each other. The transceiver module is configured to support the communication device in communicating. The processing module is used by the communication device to perform processing operations, e.g., generating information/messages to be sent, or processing a received signal to obtain information/messages.

When performing the steps described in the second aspect, the transceiver module is configured to send access type indication information and downlink control information (DCI) to a user equipment (UE), to enable the UE to determine an access type of accessing the unlicensed channel based on the access type indication information and/or the DCI, and access the unlicensed channel using a determined access type of accessing the unlicensed channel.

The access type indication information indicates a first access type, the first access type does not require to perform a listen before talk (LBT) before occupying a channel, the access type of accessing the unlicensed channel is the first access type or a second access type, and the second access type requires to perform the LBT before occupying the channel.

According to a fifth aspect of embodiments of the disclosure, a communication system is provided, which may include the communication device shown in the third aspect and the communication device shown in the fourth aspect. The communication device shown in the third aspect may be composed of a software module and/or a hardware component. The communication device shown in the fourth aspect may be composed of a software module and/or a hardware component.

According to a sixth aspect of embodiments of the disclosure, a communication device is provided, which includes a processor and a memory. The memory is used to store a computer program. The processor is used to execute the computer program to perform the first aspect or any of the possible designs of the first aspect.

According to a seventh aspect of embodiments of the disclosure, a communication device is provided, which includes a processor and a memory. The memory is used to store a computer program. The processor is used to execute the computer program to perform the second aspect or any of the possible designs of the second aspect.

According to an eighth aspect of embodiments of the disclosure, a computer-readable storage medium having instructions (computer programs, or programs) stored thereon is provided. When the instructions are called and executed by a computer, the computer is caused to execute the first aspect described above or any of the possible designs of the first aspect.

According to a ninth aspect of embodiments of the disclosure, a computer-readable storage medium having instructions (computer programs, or programs) stored thereon is provided. When the instructions are called and executed by a computer, the computer is caused to execute the second aspect described above or any of the possible designs of the second aspect.

For the beneficial effects in the above-mentioned second to ninth aspects and possible designs, reference may be made to the description of the beneficial effects of the method in the first aspect and any possible design thereof.

It is understandable that the foregoing general description and the following detailed description are exemplary and explanatory only, and do not limit the disclosure.

### BRIEF DESCRIPTION OF THE DRAWINGS

The drawings described here are used to provide a further understanding of embodiments of the disclosure and constitute a part of this disclosure. Schematic embodiments of the disclosure and descriptions thereof are used to explain embodiments of the disclosure and do not constitute an undue limitation of embodiments of the disclosure.

The accompanying drawings, which are incorporated in and constitute a part of this disclosure, illustrate embodiments consistent with embodiments of the disclosure and together with the disclosure, serve to explain principles of embodiments of the disclosure.
FIG. 1 is a structural diagram illustrating a communication system according to an embodiment.
FIG. 2 is a flowchart illustrating a method for accessing an unlicensed channel according to an embodiment.
FIG. 3 is a flowchart illustrating another method for accessing an unlicensed channel according to an embodiment.
FIG. 4 is a flowchart illustrating still another method for accessing an unlicensed channel according to an embodiment.
FIG. 5 is a flowchart illustrating yet another method for accessing an unlicensed channel according to an embodiment.
FIG. 6 is a flowchart illustrating yet another method for accessing an unlicensed channel according to an embodiment.
FIG. 7 is a flowchart illustrating yet another method for accessing an unlicensed channel according to an embodiment.
FIG. 8 is a flowchart illustrating yet another method for accessing an unlicensed channel according to an embodiment.
FIG. 9 is a flowchart illustrating yet another method for accessing an unlicensed channel according to an embodiment.
FIG. 10 is a flowchart illustrating yet another method for accessing an unlicensed channel according to an embodiment.
FIG. 11 is a flowchart illustrating yet another method for accessing an unlicensed channel according to an embodiment.
FIG. 12 is a flowchart illustrating yet another method for accessing an unlicensed channel according to an embodiment.
FIG. 13 is a schematic diagram of an apparatus for accessing an unlicensed channel according to an embodiment.
FIG. 14 is a schematic diagram illustrating a device for accessing an unlicensed channel according to an embodiment.
FIG. 15 is a schematic diagram illustrating an apparatus for accessing an unlicensed channel according to an embodiment.
FIG. 16 is a schematic diagram illustrating another device for accessing an unlicensed channel according to an embodiment.

### DETAILED DESCRIPTION

Embodiments of the disclosure will now be further described with reference to the accompanying drawings and specific implementations.

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with embodiments of the disclosure. Instead, they are merely examples of apparatuses and methods consistent with aspects related to the disclosure as recited in the appended claims.

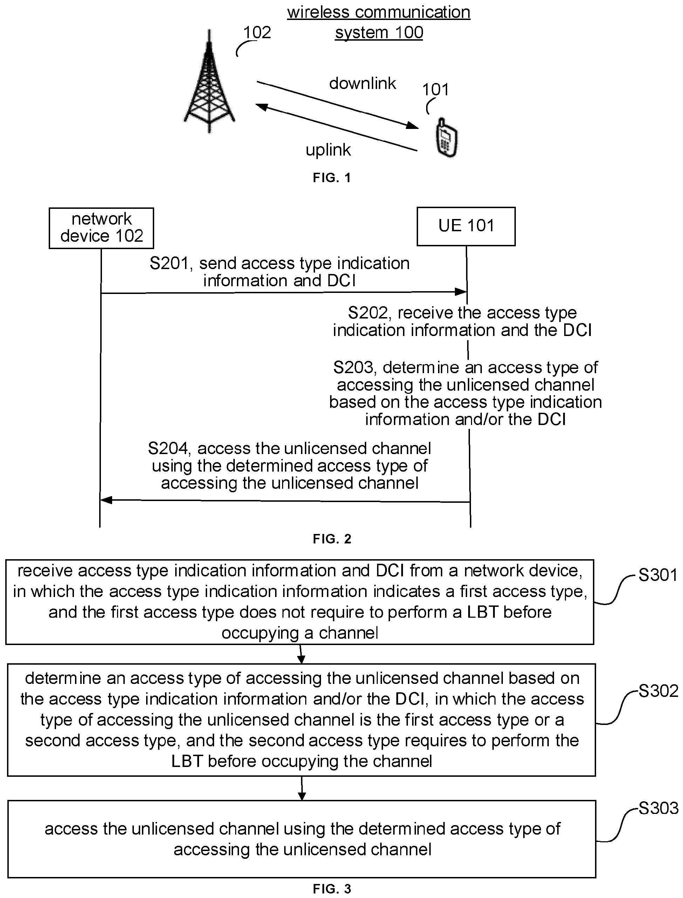

As illustrated in FIG. 1, the method for accessing an unlicensed channel according to embodiments of the disclosure may be applied to a wireless communication system 100. The wireless communication system 100 may include a user equipment (UE) 101 and a network device 102. The UE 101 is configured to support carrier aggregation. The UE 101 may be connected to multiple component carriers of the network device 102, including one primary component carrier and one or more secondary component carriers.

It is understandable that the above wireless communication system 100 may be applied in both a low-frequency scenario and a high-frequency scenario. Application scenarios of the wireless communication system 100 include, but are not limited to, a long term evolution (LTE) system, an LTE frequency division duplex (FDD) system, an LTE time division duplex (TDD) system, a worldwide interoperability for micro wave access (WiMAX) communication system, a cloud radio access network (CRAN) system, a future 5th-Generation (5G) system, a new radio (NR) communication system, a future evolved public land mobile network (PLMN) system, or others.

The UE 101 shown above may be a terminal, an access terminal, a terminal unit, a terminal station, a mobile station (MS), a distant station, a remote terminal, a mobile terminal, a wireless communication device, a terminal agent, or a user device. The UE 101 may have a wireless transceiver function, which is capable of communicating (e.g., wirelessly communicating) with one or more network devices of one or more communication systems and accepting network services provided by the network devices. The network device herein includes, but is not limited to, the network device 102.

The UE 101 may be a cellular phone, a cordless phone, a session initiation protocol (SIP) phone, a wireless local loop (WLL) station, a personal digital assistant (PDA), a handheld device having a wireless communication function, a computing device, a processing device connected to a wireless modem, a vehicle-mounted device, a wearable device, a UE in a future 5G network or a UE in a future evolved PLMN network, etc.

The network device 102 may be an access network device (or access network site). The access network device refers to a device that provides network access functions, such as a radio access network (RAN) base station. The network device 102 may specifically include a base station (BS), or include a BS and a radio resource management device for controlling the BS. The network device 102 may also include a relay station (relay device), an access point, a BS in the future 5G network, a BS in the future evolved PLMN network, or a NR BS. The network device 102 may be a wearable device or an in-vehicle device. The network device 102 may also be a communication chip containing a communication module.

For example, the network device 102 includes, but is not limited to, a next generation 5G BS (gNB, which is short for gnodeB), an evolved node B (eNB) in an LTE system, a radio network controller (RNC), a node B (NB) in a wideband code division multiple access (WCDMA) system, a wireless controller under a cloud radio access network (CRAN) system, a BS controller (BSC), a BS transceiver station (BTS) in a Global Mobile Communication System (GSM) system or a Code Division Multiple Access (CDMA) system, a home BS (HNB, which is short for home evolved node B or home node B), a baseband unit (BBU), a transmitting and receiving point (TRP), a transmitting point (TP), or a mobile switching center.

Embodiments of the disclosure provide a method for accessing an unlicensed channel. FIG. 2 is a flowchart illustrating a method for accessing an unlicensed channel according to an embodiment. As illustrated in FIG. 2, the method includes the following.

At block S201, the network device 102 sends access type indication information and downlink control information (DCI) to the UE 101, in which the access type indication information indicates a first access type, and the first access type does not require to perform a listen before talk (LBT) before occupying a channel.

At block S202, the UE 101 receives the access type indication information and the DCI from the network device 102.

At block S203, the UE 101 determines, based on the access type indication information and/or the DCI, an access type of accessing the unlicensed channel, in which the access type of accessing the unlicensed channel is the first access type or a second access type, and the second access type requires to perform the LBT before the occupying the channel.

At block S204, the UE accesses the unlicensed channel using a determined access type of accessing the unlicensed channel.

In embodiments of the disclosure, the UE receives the access type indication information and the DCI, and uses an appropriate strategy based on the access type indicated by the access type indication information and the DCI to accurately determine an access type actually indicated by the network device, to correctly access the unlicensed channel.

Embodiments of the disclosure provide a method for accessing an unlicensed channel, which is performed by the UE 101. FIG. 3 is a flowchart illustrating a method for accessing an unlicensed channel according to an embodiment. As illustrated in FIG. 3, the method includes the following.

At block S301, access type indication information and DCI are received from the network device, in which the access type indication information indicates a first access type, and the first access type does not require to perform a LBT before occupying a channel.

At block S302, an access type of accessing the unlicensed channel is determined based on the access type indication information and/or the DCI, in which the access type of accessing the unlicensed channel is the first access type or a second access type, and the second access type requires to perform the LBT before the occupying the channel.

At block S303, the unlicensed channel is accessed using a determined access type of accessing the unlicensed channel.

In some possible implementations, receiving the access type indication information from the network device in the block S301 includes: receiving broadcast information from the network device, in which the broadcast information includes the access type indication information.

In some possible implementations, receiving the access type indication information from the network device in the block S301 includes: receiving UE-specific Radio Resource Control (RRC) information from the network device, in which the UE-specific RRC information includes the access type indication information.

In some possible implementations, the DCI is a fallback DCI and the fallback DCI at least includes DCI 0-0 and DCI 1-0.

In some possible implementations, the DCI is non-fallback DCI and the non-fallback DCI at least includes DCI 0-1 and DCI 1-1.

In some possible implementations, when the access type of accessing the unlicensed channel is determined only based on the access type indication information in the block S302, it is determined that the access type of accessing the unlicensed channel is the first access type.

In some possible implementations, when the access type of accessing the unlicensed channel is determined only based on the DCI in the block S302, it is determined that the access type of accessing the unlicensed channel is an access type indicated by the DCI.

In some possible implementations, the DCI includes or does not include a channel access and cyclic prefix extension (ChannelAccess-CPext) information field, and the information field includes information related to the access type.

In some possible implementations, when the access type of accessing the unlicensed channel is based on both the access type indication information and the DCI in the block S302, one of following strategies may be used to finally determine the access type of accessing the unlicensed channel.

A first strategy: an access type (i.e., the first access type) indicated by the access type indication information is adopted. In other words, the access type indicated by the access type indication information has the highest priority or the access type indicated by the access type indication information is prioritized. Regardless of which access type or whether an access type is indicated by the DCI, the access type corresponding to the access type indication information is adopted.

A second strategy: an access type indicated by the DCI is adopted, in which the DCI is the non-fallback DCI and an indication function of the DCI is extended such that the DCI may indicate either the second access type or the first access type, and the access type (i.e., the second access type) indicated by the DCI is adopted.

After the network device and the UE negotiate and determine which strategy to use by default, the UE may use the corresponding strategy to accurately determine the access type actually indicated by the network device to correctly access the unlicensed channel.

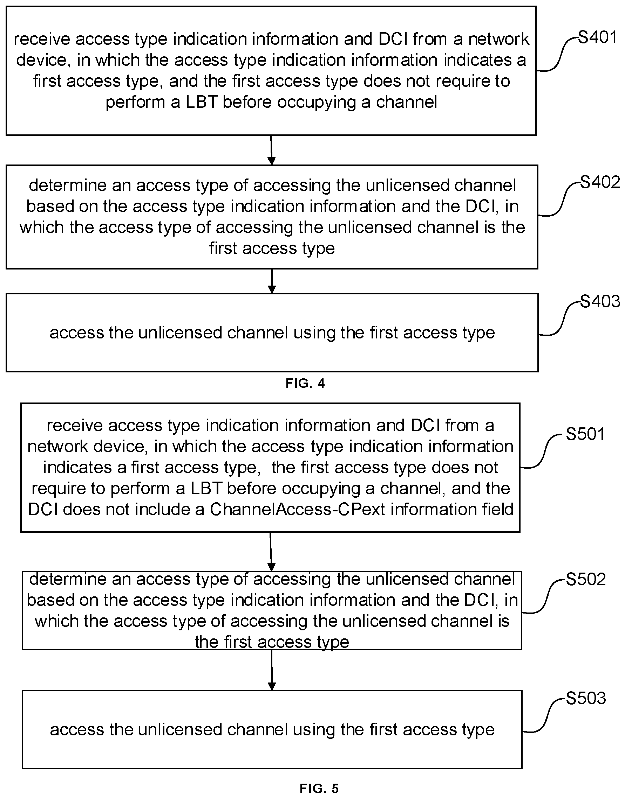

Embodiments of the disclosure provide a method for accessing an unlicensed channel, which is performed by the UE 101. FIG. 4 is a flowchart illustrating a method for accessing an unlicensed channel according to an embodiment. As illustrated in FIG. 4, the method includes the following.

At block S401, access type indication information and DCI are received from the network device, in which the access type indication information indicates a first access type, and the first access type does not require to perform a LBT before occupying a channel.

At block S402, an access type of accessing the unlicensed channel is determined based on the access type indication information and the DCI, in which the access type of accessing the unlicensed channel is the first access type.

At block S403, the unlicensed channel is accessed using the first access type.

In some possible implementations, the DCI includes a Channel Access-CPext information field, and the access type of accessing the unlicensed channel is indicated by this information field. For the fallback DCI, this information field occupies a fixed number of bits, i.e., 2 bits. For the non-fallback DCI, the number of bits occupied by this information field is determined by a number of entries contained in a RRC layer parameter ul-AccessConfigListDCI-0-1 or ul-AccessConfigListDCI-1-1. When the number of entries included in the RRC layer parameter ul-AccessConfigListDCI-0-1 is 1, the corresponding DCI does not include the Channel Access-CPext information field.

In some possible implementations, the DCI may be the fallback DCI or the non-fallback DCI, and the DCI may include the Channel Access-CPext information field or may not include the Channel Access-CPext information field.

In some possible implementations, the information field of the DCI may only indicate the second access type. However, in some possible implementations, the non-fallback DCI may only indicate the first access type. In some possible implementations, the non-fallback DCI may indicate the second access type and the non-fallback DCI may indicate the first access type as well.

In embodiments of the disclosure, regardless of whether the DCI indicates an access type, which access type is indicated by the DCI, or by which way the second access type or the first access type is indicated, the first access type indicated by the access type indication information is used as the access type of accessing the unlicensed channel.

Embodiments of the disclosure provide a method for accessing an unlicensed channel, which is performed by a UE. FIG. 5 is a flowchart illustrating a method for accessing an unlicensed channel according to an embodiment. As illustrated in FIG. 5, the method includes the following.

At block S501, access type indication information and DCI are received from a network device, in which the access type indication information indicates a first access type, the first access type does not require to perform a LBT before occupying a channel, the DCI does not include a Channel Access-CPext information field configured to indicate an access type of accessing the unlicensed channel.

At block S502, an access type of accessing the unlicensed channel is determined based on the access type indication information and the DCI, in which the access type of accessing the unlicensed channel is the first access type.

At block S503, the unlicensed channel is accessed using the first access type.

In some possible implementations, the DCI is non-fallback DCI, and the DCI does not contain a ChannelAccess-CPext information field. In this case, the BS may determine that the access type of accessing the unlicensed channel is the first access type.

For example, for the non-fallback DCI 0-1, when the RRC layer parameter ul-AccessConfigListDCl-0-1 contains 1 entry (corresponding to entry index), the number of bits occupied by the ChannelAccess-CPext information field corresponding to the unlicensed frequency band is 0. That is, the non-fallback DCI 0-1 does not include the ChannelAccess-CPext information field.

For example, for the non-fallback DCI 1-1, when the RRC layer parameter ul-AccessConfigListDCI-1-1 contains 1 entry (corresponding to entry index), the number of bits occupied by the ChannelAccess-CPext information field corresponding to the unlicensed frequency band is 0. That is, the non-fallback DCI 1-1 does not include the ChannelAccess-CPext information field.

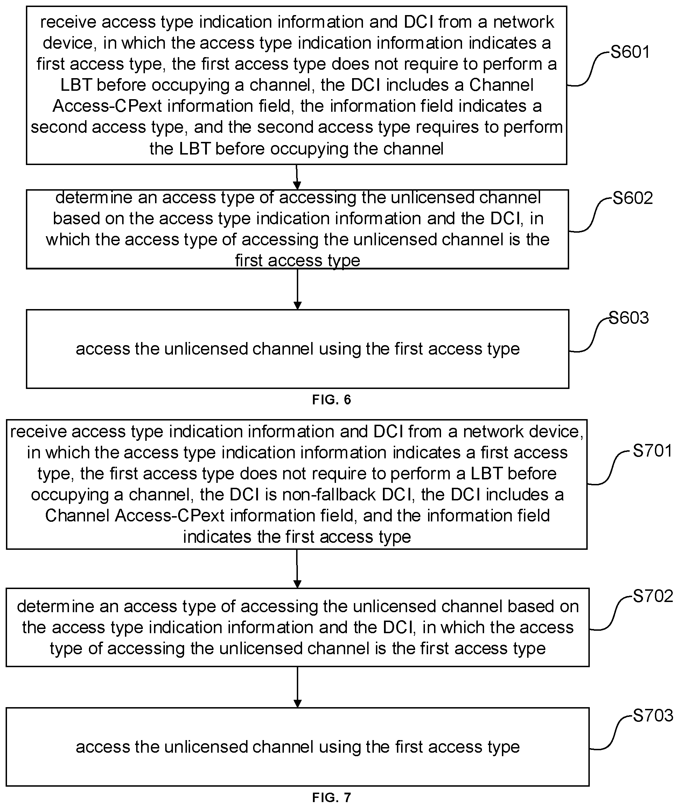

Embodiments of the disclosure provides a method for accessing an unlicensed channel, which is performed by a UE. FIG. 6 is a flowchart illustrating a method for accessing an unlicensed channel according to an embodiment. As illustrated in FIG. 6, the method includes the following.

At block S601, access type indication information and DCI are received from a network device, in which the access type indication information indicates a first access type, the first access type does not require to perform a LBT before occupying a channel, the DCI includes a Channel Access-CPext information field, the information field indicates a second access type, and the second access type requires to perform the LBT before occupying the channel.

At block S602, the access type of accessing the unlicensed channel is determined based on the access type indication information and the DCI, in which the access type of accessing the unlicensed channel is the first access type.

At block S603, the unlicensed channel is accessed using the first access type.

In some possible embodiments of the disclosure, the DCI includes a Channel Access-CPext information field for indicating a channel access type corresponding to a scheduled channel and the Channel Access-CPext information field indicates a channel access type that requires to perform the LBT before occupying the channel. In this case, the access type of accessing the unlicensed channel is determined as the first access type.

In embodiments of the disclosure, the UE receives the access type indication information and the DCI. When the access type indicated by access type indication information is different from the access type indicated by the DCI, the access type indicated by the access type indication information has the highest priority or the access type indicated by the access type indication information is prioritized, so that the UE may accurately get the actual attention of the network device and access the unlicensed channel correctly when receiving different instructions.

Various types of DCI all include the Channel Access-CPext information field configured to indicate the corresponding channel access type of the channel.

Ways that various types of DCI indicates the second access type are described in detail below in three cases.

### Case I:

In the fallback DCI (e.g., the DCI 0-0 or the DCI 1-0), the number of bits occupied by the ChannelAccess-CPext information field corresponding to the unlicensed frequency band is fixed, such as 2 bits, for indicating that the corresponding uplink/downlink channel access type is the second access type.

As shown in Table 1, the 4 types indicated in this table are all the second access type.

**Table 1**

| Bit field mapped to index | Channel Access Type | The CP extension T_"ext" index defined in Clause 5.3.1 of [4, TS 38.211] |
|---|---|---|
| 0 | Type2C-ULChannelAccess defined in [clause 4.2.1.2.3 in 37.213] | 2 |
| 1 | Type2A-ULChannelAccess defined in [clause 4.2.1.2.1 in 37.213] | 3 |
| 2 | Type2A-ULChannelAccess defined in [clause 4.2.1.2.1 in 37.213] | 1 |
| 3 | Type1-ULChannelAccess defined in [clause 4.2.1.1 in 37.213] | 0 |

Table 1 is Table 7.3.1.1.1-4: Channel access type & CP extension for DCI format 0_0 and DCI format 1_0.

### Case II:

For the non-fallback DCI 0-1, the number of bits occupied by the ChannelAccess-CPext information field corresponding to the unlicensed frequency band is log2I, which may be 0, 1, 2, 3, 4, 5 or 6, in which I is the number of entries (corresponding to entry index) contained in the RRC layer parameter ul-AccessConfigListDCI-0-1, the parameter ul-AccessConfigListDCI-0-1 includes one or more entries selected from Table 2.

In detail, as shown in Table 2, the indicated type corresponding to each entry in this table is the second access type.

**Table 2**

| **Entry index** | **Channel Access Type** | **The CP extension T_"ext" index defined in Clause 5.3.1 of [4, 38.211]** | **CAPC** |
|---|---|---|---|
| 0 | Type2C-ULChannelAccess defined in [clause 4.2.1.2.3 in 37.213] | 0 | 1 |
| 1 | Type2C-ULChannelAccess defined in [clause 4.2.1.2.3 in 37.213] | 0 | 2 |
| 2 | Type2C-ULChannelAccess defined in [clause 4.2.1.2.3 in 37.213] | 0 | 3 |
| 3 | Type2C-ULChannelAccess defined in [clause 4.2.1.2.3 in 37.213] | 0 | 4 |
| 4 | Type2C-ULChannelAccess defined in [clause 4.2.1.2.3 in 37.213] | 2 | 1 |
| 5 | Type2C-ULChannelAccess defined in [clause 4.2.1.2.3 in 37.213] | 2 | 2 |
| 6 | Type2C-ULChannelAccess defined in [clause 4.2.1.2.3 in 37.213] | 2 | 3 |
| 7 | Type2C-ULChannelAccess defined in [clause 4.2.1.2.3 in 37.213] | 2 | 4 |
| 8 | Type2B-ULChannelAccess defined in [clause 4.2.1.2.3 in 37.213] | 0 | 1 |
| 9 | Type2B-ULChannelAccess defined in [clause 4.2.1.2.3 in 37.213] | 0 | 2 |
| 10 | Type2B-ULChannelAccess defined in [clause 4.2.1.2.3 in 37.213] | 0 | 3 |
| 11 | Type2B-ULChannelAccess defined in [clause 4.2.1.2.3 in 37.213] | 0 | 4 |
| 12 | Type2B-ULChannelAccess defined in [clause 4.2.1.2.3 in 37.213] | 2 | 1 |
| 13 | Type2B-ULChannelAccess defined in [clause 4.2.1.2.3 in 37.213] | 2 | 2 |
| 14 | Type2B-ULChannelAccess defined in [clause 4.2.1.2.3 in 37.213] | 2 | 3 |
| 15 | Type2B-ULChannelAccess defined in [clause 4.2.1.2.3 in 37.213] | 2 | 4 |
| 16 | Type2A-ULChannelAccess defined in [clause 4.2.1.2.1 in 37.213] | 0 | 1 |
| 17 | Type2A-ULChannelAccess defined in [clause 4.2.1.2.1 in 37.213] | 0 | 2 |
| 18 | Type2A-ULChannelAccess defined in [clause 4.2.1.2.1 in 37.213] | 0 | 3 |
| 19 | Type2A-ULChannelAccess defined in [clause 4.2.1.2.1 in 37.213] | 0 | 4 |
| 20 | Type2A-ULChannelAccess defined in [clause 4.2.1.2.1 in 37.213] | 1 | 1 |
| 21 | Type2A-ULChannelAccess defined in [clause 4.2.1.2.1 in 37.213] | 1 | 2 |
| 22 | Type2A-ULChannelAccess defined in [clause 4.2.1.2.1 in 37.213] | 1 | 3 |
| 23 | Type2A-ULChannelAccess defined in [clause 4.2.1.2.1 in 37.213] | 1 | 4 |
| 24 | Type2A-ULChannelAccess defined in [clause 4.2.1.2.1 in 37.213] | 3 | 1 |
| 25 | Type2A-ULChannelAccess defined in [clause 4.2.1.2.1 in 37.213] | 3 | 2 |
| 26 | Type2A-ULChannelAccess defined in [clause 4.2.1.2.1 in 37.213] | 3 | 3 |
| 27 | Type2A-ULChannelAccess defined in [clause 4.2.1.2.1 in 37.213] | 3 | 4 |
| 28 | Type1-ULChannelAccess defined in [clause 4.2.1.1 in 37.213] | 0 | 1 |
| 29 | Type1-ULChannelAccess defined in [clause 4.2.1.1 in 37.213] | 0 | 2 |
| 30 | Type1-ULChannelAccess defined in [clause 4.2.1.1 in 37.213] | 0 | 3 |
| 31 | Type1-ULChannelAccess defined in [clause 4.2.1.1 in 37.213] | 0 | 4 |
| 32 | Type1-ULChannelAccess defined in [clause 4.2.1.1 in 37.213] | 1 | 1 |
| 33 | Type1-ULChannelAccess defined in [clause 4.2.1.1 in 37.213] | 1 | 2 |
| 34 | Type1-ULChannelAccess defined in [clause 4.2.1.1 in 37.213] | 1 | 3 |
| 35 | Type1-ULChannelAccess defined in [clause 4.2.1.1 in 37.213] | 1 | 4 |
| 36 | Type1-ULChannelAccess defined in [clause 4.2.1.1 in 37.213] | 2 | 1 |
| 37 | Type1-ULChannelAccess defined in [clause 4.2.1.1 in 37.213] | 2 | 2 |
| 38 | Type1-ULChannelAccess defined in [clause 4.2.1.1 in 37.213] | 2 | 3 |
| 39 | Type1-ULChannelAccess defined in [clause 4.2.1.1 in 37.213] | 2 | 4 |
| 40 | Type1-ULChannelAccess defined in [clause 4.2.1.1 in 37.213] | 3 | 1 |
| 41 | Type1-ULChannelAccess defined in [clause 4.2.1.1 in 37.213] | 3 | 2 |
| 42 | Type1-ULChannelAccess defined in [clause 4.2.1.1 in 37.213] | 3 | 3 |
| 43 | Type1-ULChannelAccess defined in [clause 4.2.1.1 in 37.213] | 3 | 4 |

Table 2 corresponds to Table 7.3.1.1.2-35: Allowed entries for DCI format 0_1, configured by higher layer parameter ul-AccessConfigListDCI-0-1.

### Case III:

For the non-fallback DCI 1-1, the number of bits occupied by the ChannelAccess-CPext information field corresponding to the unlicensed frequency band is log2l, which may be 0, 1, 2, 3 or 4, in which I is the number of entries (corresponding to the entry indexes) contained in the RRC layer parameter ul-AccessConfigListDCI-1-1, and the parameter ul-AccessConfigListDCI-1-1 includes one or more entries selected from Table 3.

As shown in Table 3, the indicated type corresponding to each entry in this table is the second access type.

**Table 3**

| **Entry index** | **Channel Access Type** | **The CP extension Text index defined n Clause 5.3.1 of [4, TS 38.211]** |
|---|---|---|
| 0 | Type2C-ULChannelAccess defined in [clause 4.2.1.2.3 in 37.213] | 0 |
| 1 | Type2C-ULChannelAccess defined in [clause 4.2.1.2.3 in 37.213] | 2 |
| 2 | Type2B-ULChannelAccess defined in [clause 4.2.1.2.3 in 37.213] | 0 |
| 3 | Type2B-ULChannelAccess defined in [clause 4.2.1.2.3 in 37.213] | 2 |
| 4 | Type2A-ULChannelAccess defined in [clause 4.2.1.2.1 in 37.213] | 0 |
| 5 | Type2A-ULChannelAccess defined in [clause 4.2.1.2.1 in 37.213] | 1 |
| 6 | Type2A-ULChannelAccess defined in [clause 4.2.1.2.1 in 37.213] | 3 |
| 7 | Type1-ULChannelAccess defined in [clause 4.2.1.1 in 37.213] | 0 |
| 8 | Type1-ULChannelAccess defined in [clause 4.2.1.1 in 37.213] | 1 |
| 9 | Type1-ULChannelAccess defined in [clause 4.2.1.1 in 37.213] | 2 |
| 10 | Type1-ULChannelAccess defined in [clause 4.2.1.1 in 37.213] | 3 |

Table 3 is Table 7.3.1.2.2-6: Allowed entries for DCI format 1_1, configured by higher layer parameter ul-AccessConfigListDCI-1-1.

A method that the DCI indicates a first access type will be described below. The method includes:
in order to make the ChannelAccess-CPext information field contained in the non-fallback DCI indicate the first access type, improving the ChannelAccess-CPext table by adding at least one entry corresponding to the first access type to the ChannelAccess-CPext table.

Therefore, the uplink access configuration list parameter includes at least one entry contained in the ChannelAccess-CPext table. The at least one entry includes an entry corresponding to the first access type. The ChannelAccess-CPext information field is configured to indicate the entry corresponding to the first access type. In this way, the DCI indicates the first access type.

In a possible example, for the non-fallback DCI 0-1, a new entry is added to Table 2, and the index corresponding to this entry is 44. When the RRC layer parameter ul-AccessConfigListDCI-0-1 includes 4 entries whose entry indexes are 1, 2, 3, and 44, the ChannelAccess-CPext information field occupies 2 bits. In an ascending order of the entry indexes, it is determined that when the value of the ChannelAccess-CPext information field is "00", the corresponding entry is the entry 1; when the value of the ChannelAccess-CPext information field is "01", the corresponding entry is the entry 2; when the value of the ChannelAccess-CPext information field is "10", the corresponding entry is the entry 3; and when the value of the ChannelAccess-CPext information field is "11", the corresponding entry is the entry 44. Therefore, when the value of the ChannelAccess-CPext information field is "11", the DCI indicates the first access type.

In a possible example, for the non-fallback DCI 1-1, a new entry is added to Table 3, and the index corresponding to this entry is 11. When RRC layer parameter ul-AccessConfigListDCI-1-1 includes 2 entries whose entry indexes are 1 and 11, the ChannelAccess-CPext information field occupies 1 bit. In an ascending order of the entry indexes, it is determined that when the value of the ChannelAccess-CPext information field is "0", the corresponding entry is the entry 1; and when the value of the ChannelAccess-CPext information field is "1", the corresponding entry is the entry 11. Therefore, when the value of the ChannelAccess-CPext information field is "1", the DCI indicates the first access type.

Embodiments of the disclosure provide a method for accessing an unlicensed channel, which is performed by a UE. FIG. 7 is a flowchart illustrating a method for accessing an unlicensed channel according to an embodiment. As illustrated in FIG. 7, the method includes the following.

At block S701, access type indication information and DCI are received from a network device, in which the access type indication information indicates a first access type, the first access type does not require to perform a LBT before occupying a channel, the DCI is the non-fallback DCI, the DCI includes a Channel Access-CPext information field, and the information field indicates the first access type.

At block S702, an access type of accessing the unlicensed channel is determined based on the access type indication information and the DCI, in which the access type of accessing the unlicensed channel is the first access type.

At block S703, the unlicensed channel is accessed using the first access type.

The method in which the information field indicates the first access type has been described above and will not be described again here.

In some possible implementations, for the non-fallback DCI 0-1, the RRC layer parameter ul-AccessConfigListDCI-0-1 only includes an entry or entries corresponding to the first access type, and the ChannelAccess-CPext information field indicates a certain entry contained in the RRC layer parameter ul-AccessConfigListDCI-0-1.

In some possible implementations, for the non-fallback DCI 0-1, the RRC layer parameter ul-AccessConfigListDCI-0-1 includes an entry or entries corresponding to the second access type and an entry or entries corresponding to the first access type. The ChannelAccess-CPext information field indicates a certain entry corresponding to the first access type contained in the RRC layer parameter ul-AccessConfigListDCI-0-1.

In some possible implementations, for the non-fallback DCI 1-1, the RRC layer parameter ul-AccessConfigListDCI-1-1 only includes an entry or entries corresponding to the first access type, and the ChannelAccess-CPext information field indicates a certain entry contained in the RRC layer parameter ul-AccessConfigListDCI-1-1.

In some possible implementations, for the non-fallback DCI 1-1, the RRC layer parameter ul-AccessConfigListDCI-1-1 includes an entry or entries corresponding to the second access type and an entry or entries corresponding to the first access type. The ChannelAccess-CPext information field indicates a certain entry corresponding to the first access type contained in the RRC layer parameter ul-AccessConfigListDCI-1-1.

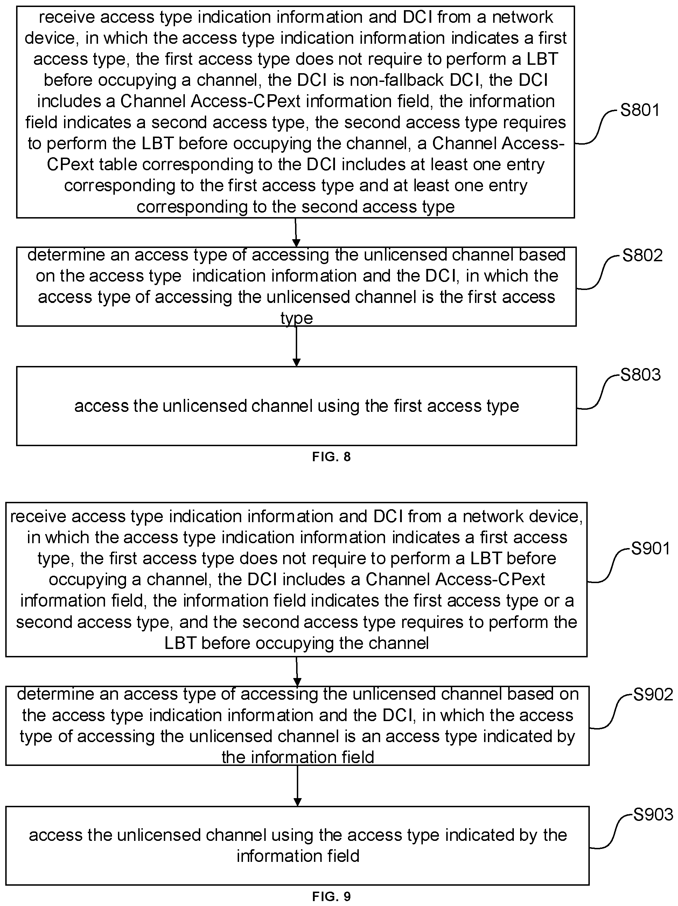

Embodiments of the disclosure provide a method for accessing an unlicensed channel, which is performed by a UE. FIG. 8 is a flowchart illustrating a method for accessing an unlicensed channel according to an embodiment. As illustrated in FIG. 8, the method includes the following.

At block S801, access type indication information and DCI are received from a network device, in which the access type indication information indicates a first access type, the first access type does not require to perform a LBT before occupying a channel, the DCI is non-fallback DCI, the DCI includes a Channel Access-CPext information field, the information field indicates a second access type, the second access type requires to perform the LBT before occupying the channel, and a Channel Access-CPext table corresponding to the DCI includes at least one entry corresponding to the first access type and at least one entry corresponding to the second access type.

At block S802, an access type of accessing the unlicensed channel is determined based on the access type indication information and the DCI, in which the access type of accessing the unlicensed channel is the first access type.

At block S803, the unlicensed channel is accessed using the first access type.

In some possible implementations, for the non-fallback DCI 0-1, the RRC layer parameter ul-AccessConfigListDCI-0-1 only includes an entry or entries corresponding to the second access type, and the ChannelAccess-CPext information field indicates a certain entry contained in the RRC layer parameter ul-AccessConfigListDCI-0-1.

In some possible implementations, for the non-fallback DCI 0-1, the RRC layer parameter ul-AccessConfigListDCI-0-1 includes an entry or entries corresponding to the second access type and an entry or entries corresponding to the first access type. The ChannelAccess-CPext information field indicates a certain entry corresponding to the second access type contained in the RRC layer parameter ul-AccessConfigListDCI-0-1.

In some possible implementations, for the non-fallback DCI 1-1, the RRC layer parameter ul-AccessConfigListDCI-1-1 only includes an entry or entries corresponding to the second access type, and the ChannelAccess-CPext information field indicates a certain entry contained in the RRC layer parameter ul-AccessConfigListDCI-1-1.

In some possible implementations, for the non-fallback DCI 1-1, the RRC layer parameter ul-AccessConfigListDCI-1-1 includes an entry or entries corresponding to the second access type and an entry or entries corresponding to the first access type. The ChannelAccess-CPext information field indicates a certain entry corresponding to the second access type contained in the RRC layer parameter ul-AccessConfigListDCI-1-1.

Embodiments of the disclosure provide a method for accessing an unlicensed channel, which is performed by a UE. FIG. 9 is a flowchart illustrating a method for accessing an unlicensed channel according to an embodiment. As illustrated in FIG. 9, the method includes the following.

At block S901, access type indication information and DCI are received from a network device, in which the access type indication information indicates a first access type, the first access type does not require to perform a LBT before occupying a channel, the DCI includes a Channel Access-CPext information field, the information field indicates the first access type or a second access type, and the second access type requires to perform the LBT before occupying the channel.

At block S902, an access type of accessing the unlicensed channel is determined based on the access type indication information and the DCI, in which the access type of accessing the unlicensed channel is an access type indicated by the information field.

At block S903, the unlicensed channel is accessed using the access type indicated by the information field.

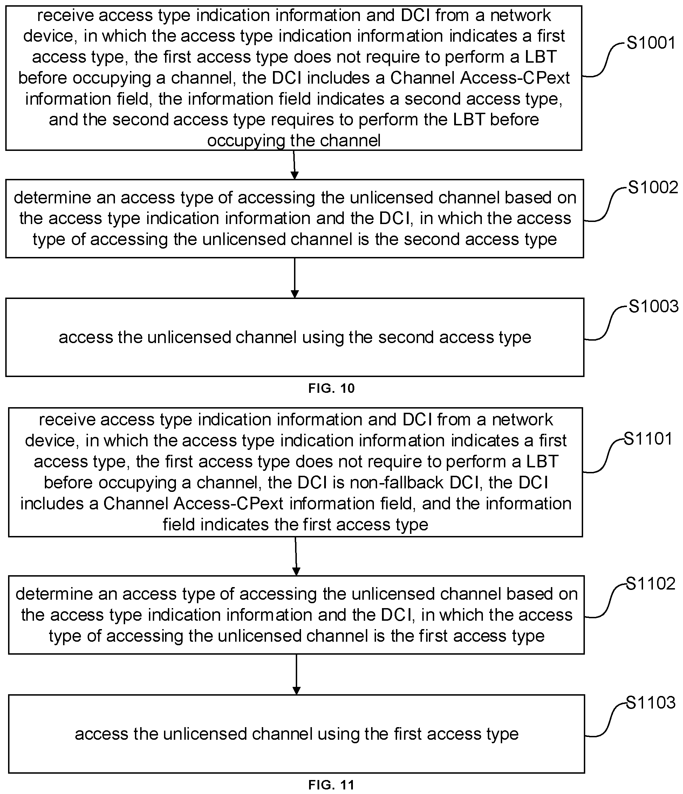

Embodiments of the disclosure provide a method for accessing an unlicensed channel, which is performed by a UE. FIG. 10 is a flowchart illustrating a method for accessing an unlicensed channel according to an embodiment. As illustrated in FIG. 10, the method includes the following.

At block S1001, access type indication information and DCI are received from a network device, in which the access type indication information indicates a first access type, the first access type does not require to perform a LBT before occupying a channel, the DCI includes a Channel Access-CPext information field, the information field indicates a second access type, and the second access type requires to perform the LBT before occupying the channel.

At block S1002, an access type of accessing the unlicensed channel is determined based on the access type indication information and the DCI, in which the access type of accessing the unlicensed channel is the second access type.

At block S1003, the unlicensed channel is accessed using the second access type.

The method that the information field of the DCI indicates the second access type has been described in above embodiments and will not be repeated here.

Embodiments of the disclosure provide a method for accessing an unlicensed channel, which is performed by a UE. FIG. 11 is a flowchart illustrating a method for accessing an unlicensed channel according to an embodiment. As illustrated in FIG. 11, the method includes the following.

At block S1101, access type indication information and DCI are received from a network device, in which the access type indication information indicates a first access type, the first access type does not require to perform a LBT before occupying a channel, the DCI is non-fallback DCI, the DCI includes a Channel Access-CPext information field, and the information field indicates the first access type.

At step S1102, an access type of accessing the unlicensed channel is determined based on the access type indication information and the DCI, in which the access type of accessing the unlicensed channel is the first access type.

At block S1103, the unlicensed channel is accessed using the first access type.

The method that the information field of the DCI indicates the first access type has been described in above embodiments and will not be repeated here.

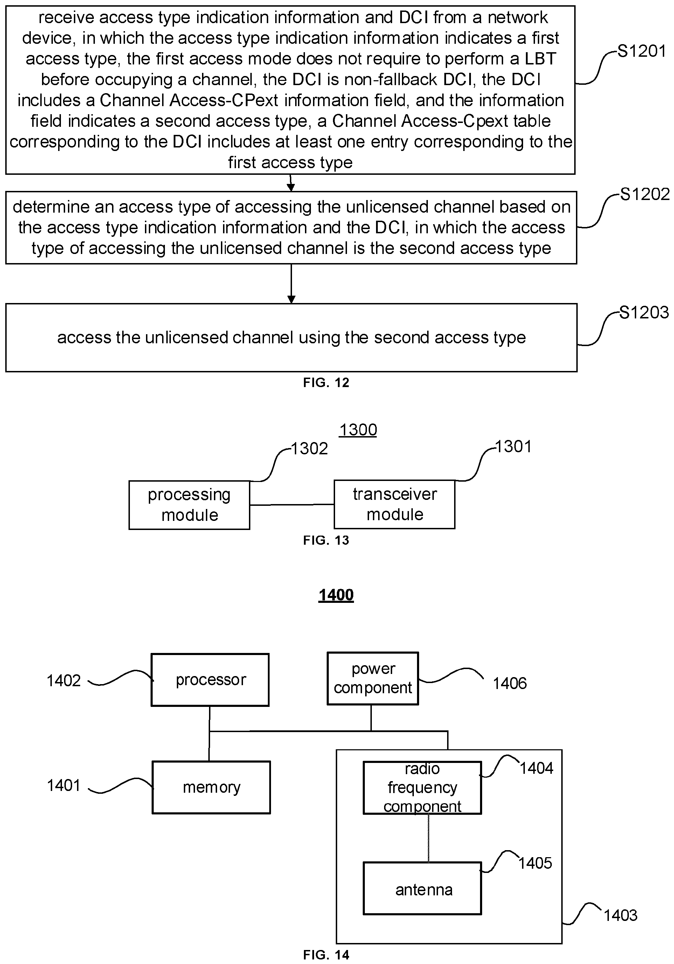

Embodiments of the disclosure provides a method for accessing an unlicensed channel, which is performed by a UE. FIG. 12 is a flowchart illustrating a method for accessing an unlicensed channel according to an embodiment. As illustrated in FIG. 12, the method includes the following.

At block S1201, access type indication information and DCI are received from a network device, in which the access type indication information indicates a first access type, the first access type does not require to perform a LBT before occupying a channel, the DCI is non-fallback DCI, the DCI includes a Channel Access-CPext information field, the information field indicates a second access type, and a Channel Access-CPext table corresponding to the DCI includes at least one entry corresponding to the first access type.

At block S1202, an access type of accessing the unlicensed channel is determined based on the access type indication information and the DCI, in which the access type of accessing the unlicensed channel is the second access type.

At block S1203, the unlicensed channel is accessed using the second access type.

Embodiments of the disclosure provide a method for accessing an unlicensed channel, which is performed by a network device. The method includes the following.

At block S1301, access type indication information and DCI are sent to a UE, to enable the UE to determine, based on the access type indication information and/or the DCI, an access type of accessing the unlicensed channel, and access the unlicensed channel using a determined access type of accessing the unlicensed channel.

The access type indication information indicates a first access type, the access type of accessing the unlicensed channel is the first access type or a second access type, the first access type does not require to perform a LBT before occupying a channel, and the second access type requires to perform the LBT before occupying the channel.

In some possible implementations, sending the access type indication information to the UE includes:
sending broadcast information to the UE, in which the broadcast information includes the access type indication information; or
sending UE-specific RRC information to the UE, in which the UE-specific RRC information includes the access type indication information.

In some possible implementations, the DCI is fallback DCI and the fallback DCI at least includes DCI 0-0 and DCI 1-0; or the DCI is non-fallback DCI and the non-fallback DCI at least include DCI 0-1 and DCI 1-1.

In some possible implementations, the DCI includes or does not include a ChannelAccess-CPext information field indicating information related to the access type. For example, the information field may indicate a first access type or a second access type.

In some possible implementations, a RRC signaling is sent to the UE. The RRC signaling includes an uplink access configuration list parameter contained in the non-fallback DCI, the uplink access configuration list parameter includes at least one entry contained in a ChannelAccess-CPext table, the ChannelAccess-CPext table includes at least one entry corresponding to the first access type, and the ChannelAccess-CPext information field indicates an entry corresponding to the first access type.

Embodiments of the disclosure provide a method for accessing an unlicensed channel, which is performed by a network device. The method includes the following.

At block 1301', a RRC signaling is sent to the UE, in which the RRC signaling includes an uplink access configuration list parameter contained in the non-fallback DCI.

The uplink access configuration list parameter includes at least one entry contained in a ChannelAccess-CPext table, the ChannelAccess-CPext table includes at least one entry corresponding to the first access type, and the first access type does not require to perform the LBT before occupying the channel.

In some possible implementations, the ChannelAccess-CPext table includes at least one entry corresponding to the first access type.

In some possible implementations, the uplink access configuration list parameter contained in the DCI 0-1 is ui-AccessConfigListDCi-0-1; or the uplink access configuration list parameter contained in the DCI 1-1 is ul-AccessConfigListDCI-1-1.

It is noteworthy that the method for adding at least one entry corresponding to the first access type to the ChannelAccess-CPext table has been described in detail in above description for the UE, and will not be repeated here.

It is understandable that block 1301' may be implemented alone or in combination with the block 1301, and the block 1301' may be executed before or after the block 1301, which is not limited by the disclosure.

Based on the same idea as above method embodiments, embodiments of the disclosure also provide a communication device that has the functions of the network device 102 in above method embodiments and may be used to perform the steps performed by the network device 102 in above method embodiments. The functions may be realized by a hardware, software, or hardware executing corresponding software. The hardware or software includes one or more modules corresponding to the above functions.

In a possible implementation, the communication device 1300 illustrated in FIG. 13 may serve as the network device involved in above method embodiments, and perform the steps executed by the network device in above method embodiments. As illustrated in FIG. 13, the communication device 1300 may include a transceiver module 1301 and a processing module 1302. The transceiver module 1301 and the processing module 1302 are coupled to each other. The transceiver module 1301 is configured to support the communication device 1300 to communicate. The transceiver module 1301 may have wireless communication functions. For example, the transceiver module 1301 may perform wireless communication with other communication devices through a radio interface. The processing module 1302 is configured to support the communication device 1300 to perform the processing operations in above method embodiments, which include but are not limited to: generating information/messages sent by the transceiver module 1301 and/or demodulating and decoding signals received by the transceiver module 1301.

When performing the steps executed by the network device 102, the transceiver module 1301 is configured to send access type indication information and DCI to a UE, to enable the UE to determine an access type of accessing the unlicensed channel based on the access type indication information and/or the DCI, and access the unlicensed channel using the determined access type of accessing the unlicensed channel.

The access type indication information indicates a first access type, the access type of accessing the unlicensed channel is the first access type or a second access type, the first access type does not require to perform a LBT before occupying a channel, and the second access type requires to perform the LBT before occupying the channel.

When the communication device is the network device 102, its structure may be shown in FIG. 14. The structure of the communication device is illustrated by taking the BS as an example. As shown in FIG. 14, the device 1400 includes a memory 1401, a processor 1402, a transceiver component 1403, and a power component 1406. The memory 1401 is coupled to the processor 1402, and is configured to store programs and data necessary for the communication device 1400 to implement various functions. The processor 1402 is configured to support the communication device 1400 to perform the corresponding functions in the method described above. The functions may be realized by calling programs stored in the memory 1401. The transceiver component 1403 is a wireless transceiver used to support the communication device 1400 to receive and transmit signaling and/or data over a radio interface, which may also be referred to as a transceiver unit or a communication unit. The transceiver component 1403 may include a radio frequency component 1404 and one or more antennas 1405. The radio frequency component 1404 may be a remote radio unit (RRU), which may be used specifically for transmission of radio frequency signals and conversion between radio frequency signals and baseband signals. The one or more antennas 1405 may be specifically used to perform radiation and reception of radio frequency signals.

When the communication device 1400 needs to send data, the processor 1402 may output a baseband signal to a radio frequency unit after performing the baseband processing on the data to be sent. The radio frequency unit will send the radio frequency signal through an antenna in the form of electromagnetic waves after performing the radio frequency processing on the baseband signal. When there is data sent to the communication device 1400, the radio frequency unit receives the radio frequency signal through the antenna, converts the radio frequency signal to the baseband signal, and sends the baseband signal to the processor 1402. The processor 1402 converts the baseband signal to data and processes the data.

Based on the same concept as above method embodiments, embodiments of the disclosure also provide a communication device. The communication device may have the functions of the UE 101 in above method embodiments, and may be used to perform the steps performed by the UE 101 in above method embodiments. The functions may be realized by a hardware, software, or hardware executing corresponding software. The hardware or software includes one or more modules corresponding to the above functions.

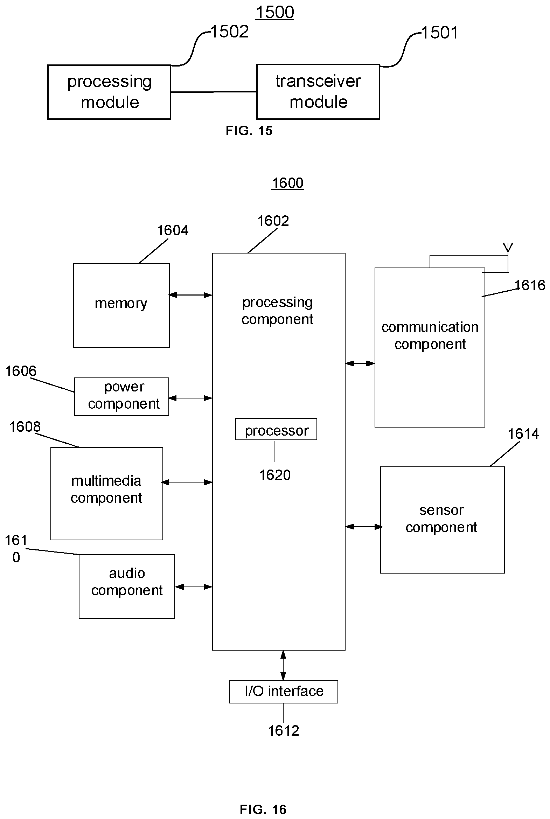

In a possible implementation, the communication device 1500 illustrated in FIG. 15 may serve as the UE involved in above method embodiments, and perform the steps performed by the UE in above method embodiment. As shown in FIG. 15, the communication device 1500 may include a transceiver module 1501 and a processing module 1502 coupled to each other. The transceiver module 1501 is configured to support the communication device 1500 to communicate. The transceiver module 1501 may have wireless communication functions. For example, the transceiver module 1501 may perform wireless communication with other communication devices through a radio interface. The processing module 1502 is configured to support the communication device 1500 to perform the processing operations in above method embodiments, which include but are not limited to: generating information/messages sent by the transceiver module 1501 and/or demodulating and decoding signals received by the transceiver module 1501.

When executing the steps implemented by the UE 101, the transceiver module 1501 is configured to receive access type indication information and DCI from a network device, in which the access type indication information indicates a first access type, and the first access type does not require to perform a LBT before occupying a channel. The processing module 1502 is configured to determine an access type of accessing the unlicensed channel based on the access type indication information and/or the DCI, in which the access type of accessing the unlicensed channel is the first access type or a second access type, and the second access type requires to perform the LBT before occupying the channel. The transceiver module 1501 is further configured to access the unlicensed channel using the determined access type of accessing the unlicensed channel.

In a possible implementation, the transceiver module 1501 is further configured to: receive the access type indication information from the network device by receiving broadcast information from the network device, in which the broadcast information includes the access type indication information; or, receiving UE-specific RRC information from the network device, in which the UE-specific RRC information includes the access type indication information.

In a possible implementation, the processing module 1502 is further configured to: determine the access type of accessing the unlicensed channel based on the access type indication information and the DCI by: determining that the access type of accessing the unlicensed channel is the first access type in response to the DCI being non-fallback DCI and the DCI not containing the ChannelAccess-CPext information field.

In a possible implementation, the processing module 1502 is further configured to: determine the access type of accessing the unlicensed channel based on the access type indication information and the DCI by:
determining that the access type of accessing the unlicensed channel is the first access type in response to the DCI containing the ChannelAccess-CPext information field and the information field indicating the second access type.

In a possible implementation, the processing module 1502 is further configured to determine the access type of accessing the unlicensed channel based on the access type indication information and the DCI by: determining that the access type of accessing the unlicensed channel is the first access type in response to the DCI being non-fallback DCI, the DCI containing the ChannelAccess-CPext information field, and the information field indicating the first access type.

In a possible implementation, the processing module 1502 is further configured to determine access type of accessing the unlicensed channel based on the access type indication information and the DCI by: determining that the access type of accessing the unlicensed channel is an access type corresponding to information indicated by the information field in response to the DCI being non-fallback DCI, the DCI containing the ChannelAccess-CPext information field, and the information field indicating information related to an access type (e.g., the information field may indicate the first access type or the second access type).

In a possible implementation, the transceiver module 1501 is configured to receive a RRC signaling from the network device, in which the RRC signaling includes an uplink access configuration list parameter contained in the non-fallback DCI, the uplink access configuration list parameter includes at least one entry contained in a ChannelAccess-CPext table, the at least one entry includes an entry corresponding to the first access type, the ChannelAccess-CPext information field indicates an entry corresponding to the first access type, and the ChannelAccess-CPext table includes at least one entry corresponding to the first access type.

In a possible implementation, the uplink access configuration list parameter contained in the DCI 0-1 is ui-AccessConfigListDCi-0-1; or the uplink access configuration list parameter contained in the DCI 1-1 is ul-AccessConfigListDCI-1-1.

When the communication device is a UE 101, its structure may be illustrated in FIG. 6. The device 1600 may be a mobile phone, a computer, a digital broadcasting terminal, a message transceiver device, a game console, a tablet device, a medical device, a fitness device, and a PDA.

As illustrated in FIG. 16, the device 1600 may include one or more of the following components: a processing component 1602, a memory 1604, a power component 1606, a multimedia component 1608, an audio component 1610, an input/output (I/O) interface 1612, a sensor component 1614, and a communication component 1616.

The processing component 1602 typically controls overall operations of the device 1600, such as the operations associated with display, telephone calls, data communications, camera operations, and recording operations. The processing component 1602 may include one or more processors 1620 to perform all or part of the steps in the above described methods. Moreover, the processing component 1602 may include one or more modules which facilitate the interaction between the processing component 1602 and other components. For example, the processing component 1602 may include a multimedia module to facilitate the interaction between the multimedia component 1608 and the processing component 1602.

The memory 1604 is configured to store various types of data to support the operation of the device 1600. Examples of such data include instructions for any applications or methods operated on the device 1600, contact data, phonebook data, messages, pictures, video, etc. The memory 1604 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 1606 provides power to various components of the device 1600. The power component 1606 may include a power management system, one or more power sources, and any other components associated with the generation, management, and distribution of power in the device 1600.

The multimedia component 1608 includes a screen providing an output interface between the device 1600 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 1608 includes a front-facing camera and/or a rear-facing camera. When the device 1600 is in an operating mode, such as a shooting mode or a video mode, the front-facing camera and/or the rear-facing camera may receive external multimedia data. Each of the front-facing camera and the rear-facing camera may be a fixed optical lens system or has focal length and optical zoom capability.

The audio component 1610 is configured to output and/or input audio signals. For example, the audio component 1610 includes a microphone (MIC) configured to receive an external audio signal when the device 1600 is in an operation mode, such as a call mode, a recording mode, and a voice recognition mode. The received audio signal may be further stored in the memory 1604 or transmitted via the communication component 1616. In some embodiments, the audio component 1610 further includes a speaker to output audio signals.

The I/O interface 1612 provides an interface between the processing component 1602 and peripheral interface modules, such as a keyboard, a click wheel, buttons, and the like. The buttons may include, but are not limited to, a home button, a volume button, a starting button, and a locking button.

The sensor component 1614 includes one or more sensors to provide status assessments of various aspects of the device 1600. For instance, the sensor component 1614 may detect an open/closed status of the device 1600, relative positioning of components, e.g., the display and the keypad, of the device 1600, a change in position of the device 1600 or a component of the device 1600, a presence or absence of a user contact with the device 1600, an orientation or an acceleration/deceleration of the device 1600, and a change in temperature of the device 1600. The sensor component 1614 may include a proximity sensor configured to detect the presence of nearby objects without any physical contact. The sensor component 1614 may also include a light sensor, such as a Complementary Metal Oxide Semiconductor (CMOS) or Charge-Coupled Device (CCD) image sensor, for using in imaging applications. In some embodiments, the sensor component 1614 may also include an accelerometer sensor, a gyroscope sensor, a magnetic sensor, a pressure sensor, or a temperature sensor.

The communication component 1616 is configured to facilitate communication, wired or wirelessly, between the device 1600 and other devices. The device 1600 may access a wireless network based on a communication standard, such as Wi-Fi, 2G or 3G, or a combination thereof. In an embodiment, the communication component 1616 receives a broadcast signal from an external broadcast management system or broadcast associated information via a broadcast channel. In an embodiment, the communication component 1616 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In embodiments, the device 1600 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

In embodiments, there is also provided a non-transitory computer readable storage medium including instructions, such as the memory 1604, executable by the processor 1620 in the device 1600, for performing the above methods. For example, the non-transitory computer-readable storage medium may be a ROM, a Random Access Memory (RAM), a CD-ROM, a magnetic tape, a floppy disc, and an optical data storage device.

Other implementations of the disclosure will be apparent to those skilled in the art from consideration of the specification and practice of the disclosure disclosed here. This disclosure is intended to cover any variations, usages, or adaptations of the disclosure following the general principles thereof and including such departures from the disclosure as come within known or customary practice in the art. It is intended that the specification and examples are considered as illustrative only, with a true scope and spirit of the disclosure being indicated by the following claims.

It will be appreciated that the disclosure is not limited to the exact construction that has been described above and illustrated in the accompanying drawings, and that various modifications and changes may be made without departing from the scope thereof. It is intended that the scope of the disclosure only be limited by the appended claims.

### INDUSTRIAL PRACTICALITY

The UE receives the access type indication information and the DCI, and uses an appropriate strategy based on the access type indicated by the access type indication information and the DCI to accurately determine an access type actually indicated by the network device, to correctly access the unlicensed channel..

## Claims

1. A method for accessing an unlicensed channel, performed by a User Equipment (UE), comprising:
receiving access type indication information and Downlink Control Information (DCI) from a network device, wherein the access type indication information indicates a first access type, and the first access type does not require to perform a Listen Before Talk (LBT) before occupying a channel;
determining an access type of accessing the unlicensed channel based on the access type indication information and/or the DCI, wherein the access type of accessing the unlicensed channel is the first access type or a second access type, and the second access type requires to perform the LBT before occupying the channel; and
accessing the unlicensed channel using a determined access type of accessing the unlicensed channel.

2. The method of claim 1, wherein receiving the access type indication information from the network device comprises:
receiving broadcast information from the network device, wherein the broadcast information comprises the access type indication information; or
receiving UE-specific Radio Resource Control (RRC) information from the network device, wherein the UE-specific RRC information comprises the access type indication information.

3. The method of claim 1, wherein the DCI is fallback DCI and the fallback DCI at least comprises DCI 0-0 and DCI 1-0; or the DCI is non-fallback DCI and the non-fallback DCI at least comprises DCI 0-1 and DCI 1-1.

4. The method of claim 1, wherein the DCI comprises or does not comprises a channel access and cyclic prefix extension (ChannelAccess-CPext) information field comprising information related to the access type.

5. The method of claim 4, wherein determining the access type of accessing the unlicensed channel based on the access type indication information and the DCI comprises:
in response to the DCI being non-fallback DCI and the DCI not containing the ChannelAccess-CPext information field, determining that the access type of accessing the unlicensed channel is the first access type.

6. The method of claim 4, wherein determining the access type of accessing the unlicensed channel based on the access type indication information and the DCI comprises:
in response to the DCI containing the ChannelAccess-CPext information field and the information field indicating the second access type, determining that the access type of accessing the unlicensed channel is the first access type.

7. The method of claim 4, wherein determining the access type of accessing the unlicensed channel based on the access type indication information and the DCI comprises:
in response to the DCI being non-fallback DCI, the DCI containing the ChannelAccess-CPext information field, and the information field indicating the first access type, determining that the access type of accessing the unlicensed channel is the first access type.

8. The method of claim 4, wherein determining the access type of accessing the unlicensed channel based on the access type indication information and the DCI comprises:
in response to the DCI being non-fallback DCI, the DCI containing the ChannelAccess-CPext information field, and the information field indicating the first access type or the second access type, determining that the access type of accessing the unlicensed channel is an access type corresponding to information indicated by the information field.

9. The method of claim 7 or 8, further comprising:
receiving a RRC signaling from the network device, wherein the RRC signaling comprises an uplink access configuration list parameter contained in the non-fallback DCI, the uplink access configuration list parameter comprises at least one entry contained in a ChannelAccess-CPext table, the at least one entry comprises an entry corresponding to the first access type, and the ChannelAccess-CPext information field indicates the entry corresponding to the first access type.

10. The method of claim 9, wherein the ChannelAccess-CPext table comprises at least one entry corresponding to the first access type.

11. The method of claim 9, wherein the uplink access configuration list parameter contained in DCI 0-1 is ul-AccessConfigListDCI-0-1; or
the uplink access configuration list parameter contained in DCI 1-1 is ui-AccessConfigListDCi-1-1.

12. A method for accessing an unlicensed channel, performed by a network device, comprising:
sending access type indication information and downlink control information (DCI) to a user equipment (UE) to enable the UE to determine an access type of accessing the unlicensed channel based on the access type indication information and/or the DCI, and access the unlicensed channel using a determined access type of accessing the unlicensed channel;
wherein the access type indication information indicates a first access type, the access type of accessing the unlicensed channel is the first access type or a second access type, the first access type does not require to perform a listen before talk (LBT) before occupying a channel, and the second access type requires to perform the LBT before occupying the channel.

13. The method of claim 12, wherein sending the access type indication information to the UE comprises:
sending broadcast information to the UE, wherein the broadcast information comprises the access type indication information; or,
sending UE-specific RRC information to the UE, wherein the UE-specific RRC information comprises the access type indication information.

14. The method of claim 12, wherein the DCI is fallback DCI and the fallback at least comprises DCI 0-0 and DCI 1-0; or
the DCI is non-fallback DCI and the non-fallback DCI at least comprises DCI 0-1 and DCI 1-1.

15. The method of claim 14, wherein the DCI comprise or does not comprises a channel access and cyclic prefix extension (ChannelAccess-CPext) information field comprising information related to the access type.

16. The method of claim 15, further comprising:
sending a radio resource control (RRC) signaling to the UE, wherein the RRC signaling comprises an uplink access configuration list parameter contained in the non-fallback DCI, the uplink access configuration list parameter comprises at least one entry contained in a ChannelAccess-CPext table, the ChannelAccess-CPext table comprises at least one entry corresponding to the first access type, and the ChannelAccess-CPext information field indicates an entry corresponding to the first access type.

17. The method of claim 14, wherein the uplink access configuration list parameter contained in the DCI 0-1 is ui-AccessConfigListDCi-0-1; or
the uplink access configuration list parameter contained in the DCI 1-1 is ui-AccessConfigListDCi-1-1.

18. A communication apparatus, comprising:
a transceiver module, configured to receive access type indication information and downlink control information (DCI) from a network device, wherein the access type indication information indicates a first access type, and the first access type does not require to perform a listen before talk (LBT) before occupying a channel;
a processing module, configured to determine an access type of accessing the unlicensed channel based on the access type indication information and/or the DCI, wherein the access type of accessing the unlicensed channel is the first access type or a second access type, and the second access type requires to perform the LBT before occupying the channel; and
the transceiver module, configured to access the unlicensed channel using the determined access type of accessing the unlicensed channel.

19. A communication apparatus, comprising:
a transceiver module, configured to send access type indication information and downlink control information (DCI) to a user equipment (UE) to enable UE to determine an access type of accessing the unlicensed channel based on the access type indication information and/or the DCI, and access the unlicensed channel using the determined access type of accessing the unlicensed channel;
wherein the access type indication information indicates a first access type, the first access type does not require to perform a listen before talk (LBT) before occupying a channel, the access type of accessing the unlicensed channel is the first access type or a second access type, and the second access type requires to perform the LBT before occupying the channel.

20. A communication device, comprising:
a memory, configured to store a computer program; and
a processor, configured to execute the computer program to perform the method of any one of claims 1 to 11.

21. A communication device, comprising:
a memory, configured to store a computer program; and
a processor, configured to execute the computer program to perform the method of any one of claims 12 to 17.

22. A computer-readable storage medium, having instructions stored thereon, wherein when the instructions are called and executed by a computer, the computer is caused to perform the method of any one of claims 1 to 11.

23. A computer-readable storage medium, having instructions stored thereon, wherein when the instructions are called and executed by a computer, the computer is caused to perform the method of any one of claims 12 to 17.
